# EUROPEAN PATENT APPLICATION

(11) **EP 1 672 415 A1**
(43) Date of publication of application: **21.06.2006**
(21) Application number: 04029968.7
(22) Date of filing: 17.12.2004
(51) Int. Cl.: G02F 1/1337

(54) **Method of forming a nanorelief structure on a film surface**

(71) Applicant: Freewire Limited, Monmouth, Monmouthshire NP25 5AT (GB)
(72) Inventor: Stretton, Stephen, Dubai (AE)
(74) Representative: Engel, Christoph Klaus

(57) **Abstract**

A method of forming an undulating nanorelief structure on a film (3) surface comprising the steps of: applying an amorphous silicon layer (4) on the underlying film (3); dispersing the amorphous silicon surface with the ion flow of nitrogen molecules (5) in vacuum, whereby the nitrogen ion energy, nitrogen ion-beam angle with respect to the amorphous silicon surface, the depth of nanorelief structure and the altitude of the nanorelief structure being selected on the basis of the wavelength value of the periodic nanorelief structure being in the range of 30-180 nm: the step of dispersing the amorphous silicon surface being carried out until the nanostructure is formed located from the surface of the underlying film at the distance of one third of the wavelength of the nanorelief structure and with the wave crest orientation obliquely to the direction of the ion flow projection onto the amorphous silicon surface; transferring the nanorelief structure onto the underlying film surface by removing the nanorelief structure and film materials by ion-beam or plasma etching.

## Description

The invention is related to nonlithographic methods of undulating nanorelief formation on film surface. Films with such nanorelief transparent for optical radiation can be used for liquid crystal orientation in liquid-crystal (LC) units, in liquid-crystal displays (LCD) and liquid-crystal screens in particular, to produce polaroids and phase-shifting, antireflection, antiflash and diffusing films in optical devices. The nanorelief films and films with complementary reflecting covering on their surface can be used as directional diffuse reflectors, particularly in LCD and reflective liquid-crystal screens.

Specifically the invention is related to nonlithographic methods of nanorelief formation using ion-beam technique and dry plasma processes used in microelectronic technologies, namely to self-forming undulating nanorelief on the surface of amorphous silicon layer applied on the film when exposing this layer to the -nitrogen ion flow irradiation and to the nanorelief transfer into the underlying layer or film by means of ion-beam or plasma etching of amorphous silicon and film materials. At the same time in particular the nanorelief modification can be carried out by means of selective and anisotropic plasma process until amorphous silicon nanobands are formed on the underlying film with the follow-up anisotropic plasma process using amorphous silicon bands as a mask until the nanorelief is formed in the underlying film.

Currently LCD and reflective liquid-crystal screens are widely used to reflect graphic documentation. To operate various types of LCD and reflective liquid-crystal screens specific liquid crystal molecule orientation should be provided (for example, nematics) on the surface of the aligning films between which the liquid-crystal layer is situated.

It is well known that as aligning films, polymer films are used, polyimide films in particular having been subjected to special machine work the main point of which consists in rubbing the film surface in one direction by means of a roller covered with fluffy tissue of short polymer fibers (for example, viscose, polyethers, nylon, etc.). An example of the mechanical method of the aligning polyimide film formation has been explained in the patent specification (US 6219123, April 17, 2001).

The formation of static electrical charges, dust particles and impossibility to maintain strictly targeted fiber direction are the drawbacks of the mechanical method of rubbing aligning films with polymer fibers. It should be noted that this method of aligning film formation is not compatible with the cleanness conditions of the production areas in which the other processes of LCD and liquid-crystal screen manufacturing are being held.

A few methods of aligning, polaroid and phase-shifting film formation are known based on creating undulating microrelief on their surface. Multiple patterns of aligning, polaroid and phase-shifting film formation based on microrelief have been explained in the patent specification in its application to LCD and liquid-crystal screen units (DE 4213802, January 21, 1993).

The mentioned microreliefs have been created as a result of the following methods: photosensitive polyimide layer holographic exposure, lithography techniques, microstrains technology or microstroke application on epoxy resin surface by means of diamond stylus bar-machine, all known in microtechnology. The drawbacks of all these methods are their high price, low yield of finished product and low output. It is worth mentioning that when ensuring linewidth of 100 nm or less lithography technique price grows significantly and the use of such facilities can hardly be justified to create a simple design consisting of line array on condition nonlithographic techniques of creating such design to be available.

A few methods of aligning film formation for liquid crystals are known developed by IBM company specialists which are based on film surface irradiation with low energy argon ions (from 20 to 700 electronvolts) (US 5770826, June 23, 2000; US 6020946, February 1, 2000; US 6061114, May 9, 2000; US 6061115, May 9, 2000; US 6124914, September 26, 2000; US 6331381, December 18, 2001). However ion irradiation in the mentioned methods does not result in anisotropic topography formation on the film surface. The orientation is carried out by creating chemical bond specific orientation on the ion irradiated surface. Moreover an important parameter of nematic orientation - starting molecule angle with respect to orienting surface level - depends on ion irradiation dose, ion angle and their energy. Thus high rate of these parameter control is necessary with their homogeneous distribution on the film surface.

Liquid crystal orientation by means of relief surface is known to open possibilities to create principally new liquid crystal screens with substantially reduced power consumption on the basis of bistable nematic orientation (patent: US 20010028426, October 11, 2001 and the article: G.P. Bryan-Brown Proceedings of the International Displays Research Conference, Palm Beach, Florida, USA (2000) pp. 229-232). In the given article the possibility of using modern materials for liquid crystal screens has been also shown, specifically instead of glass substrates polyester sulfone and polyethylene terephthalate films have been used and along with transparent electrodes made of indium and tin oxide mixture in polyester sulfone/ indium and tin oxide mixture structures, transparent electrodes made of poly-3,4-ethylenedioxythiophene films were used in polyethylene terephthalate/poly-3,4-ethylenedioxythiophene structures. The technology use of polyester sulfone, polyethylene terephthalate and poly-3,4-ethylenedioxythiophene polymer films allows to produce flexible LCD and liquid crystal screens completely of plastic and the use of poly-3,4-ethylenedioxythiophene film instead of indium and tin oxide mix structures allows to prepare the orienting surface directly on the polyethylene terephthalate film surface without any aligning film. The microreliefs in this work have been created on the photoresist surface by means of optical lithography methods. Thus it is of great importance to have a method of nonlithographic controlled topography formation at the disposal on both polymeric and inorganic material surfaces for their use in optics.

A nonlithographic method of forming the corrugated surface of thin polymer optical films is also known based on separating polymer LC and monomer LC phases. When liquid film consisting of the mixture of these substances is exposed to ultra-violet radiation, the polymer LC phase is separated from the monomer LC phase and is turned into a solid substance, specifically in the form of the corrugated polymer film (Ibn-Elhaj M. & Schadt M., Nature 410 (2001) pp. 796-799). In this method the anisotropic polymer structure period and amplitude depend on the thickness of the liquid film exposed to ultraviolet radiation, mixture composition and ultraviolet radiation conditions. Therefore to ensure the targeted structure period, the liquid film specific thickness should be provided which could be unacceptable in some cases.

The nonlithographic method of forming the undulating nanostructure by means of exposing silicon surface to nitrogen ion-beam is also known explained in the patent specification (US 6274007, August 14, 2001). In the certain method of undulating nanostructure plasma modification, the nanostructure is formed in the layer of amorphous silicon precipitated on the silicon oxide layer, explained in the specification of the patent invention (RU 2001127264/28(029205) "Method of FET manufacturing with periodically doped channel"). These two methods were assumed as a base of the present invention.

The technical task of the present invention is to transfer the relief of the nanostructure self-formed on the surface of amorphous silicon layer by the ion-beam method, into the underlying layer or film by ion-beam or plasma etching.

The technical goal consists in the improvement of the nanorelief formation on the film surface.

This is achieved by the following sequence of operations.

A layer of amorphous silicon from 1,5 to 3 depth thick should be applied on the film to form amorphous silicon nanostructures.

The amorphous silicon surface should be dispersed with the beam of vacuum nitrogen molecule ions selecting nitrogen ion energy, nitrogen ion-beam angle with respect to amorphous silicon surface, the depth of nanostructure formation and nanostructure altitude on the basis of the wavelength value in the range of 30-180 nm until the nanostructure is formed located from the film at the distance of one third wavelength along the nanostructure wave troughs and with the wave crest orientation obliquely to the direction of the ion flow projection onto the surface of amorphous silicon.

The nanostructure relief should be transferred to the film surface removing the nanostructure and film materials.

It is desirable to carry out the formation of nitrogen molecule ion flow by means of Kaufman ion source.

It is desirable to remove the nanostructure and film materials by ion-beam etching.

It is desirable to remove the nanostructure and film materials by plasma etching.

It is desirable to remove the nanostructure amorphous silicon selectively with respect to nanostructure silicon nitride and vertically with respect to the film surface right up to the film surface.

It is desirable to remove the film material vertically with respect to the film surface and selectively with respect to the nanostructure materials.

It is desirable to remove the nanostructure amorphous silicon by means of Cl₂-Ar reactive ion plasma etching.

It is desirable to remove the nanostructure amorphous silicon selectively with respect to the film material.

It is desirable to remove the amorphous silicon after removing the film material.

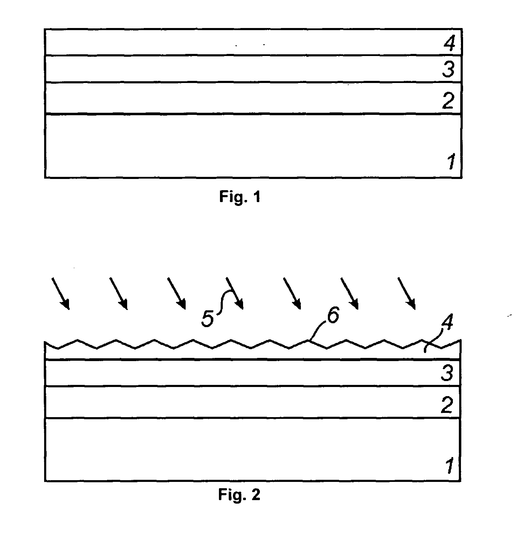

The invention main point is explained by drawings where on
- Fig. 1: the layer structure cross-section is shown before ion irradiation.
- Fig. 2: the layer structure cross-section is shown in the process of the nanostructure formation.

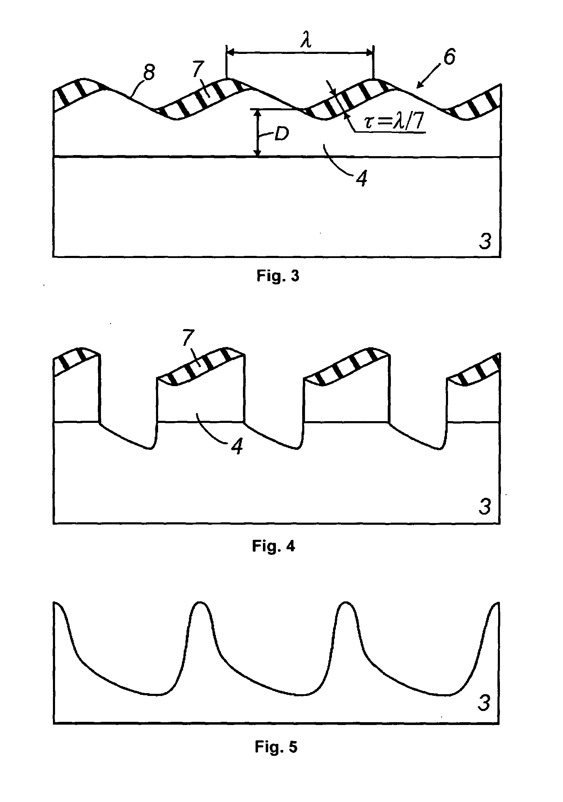

- Fig. 3: the undulating nanostructure cross-section is shown formed in the amorphous silicon layer.
- Fig. 4: the nanostructure cross-section is shown after the anisotropic plasma etching.
- Fig. 5: the nanorelief cross-section is shown transferred into the film by the isotropic plasma structure etching shown on picture 4.

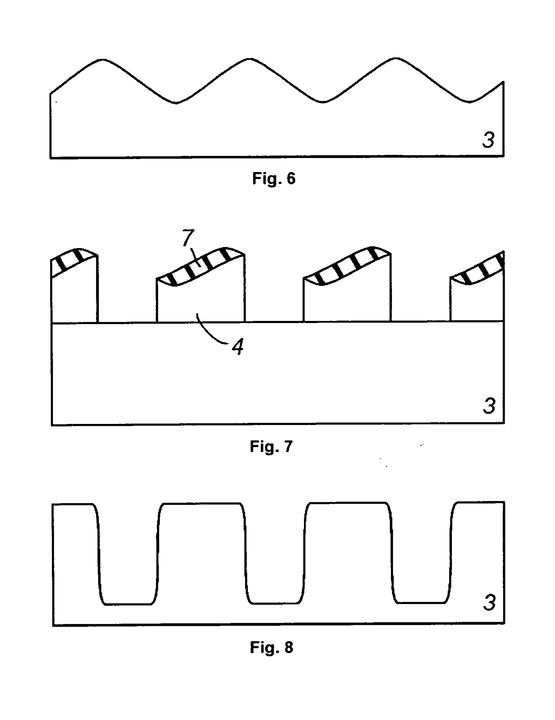

- Fig. 6: the film cross-section is shown with the nanorelief transferred into the film as a result of the nanostructure ion-beam or nonselective plasma etching.
- Fig. 7: the nanostructure cross-section is shown after the anisotropic plasma etching with respect to the film material.
- Fig. 8: the nanorelief cross-section is shown transferred into the film by the structure anisotropic plasma etching shown on picture 7.

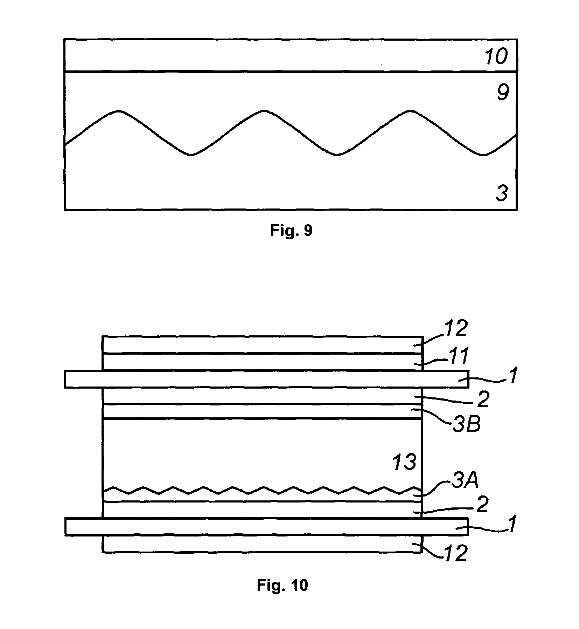

- Fig. 9: the cross-section of a polarizer is shown made on the basis of the nanorelief film and LC polymer with dichroic dye groups in its composition.
- Fig. 10: the LC unit cross-section is shown.

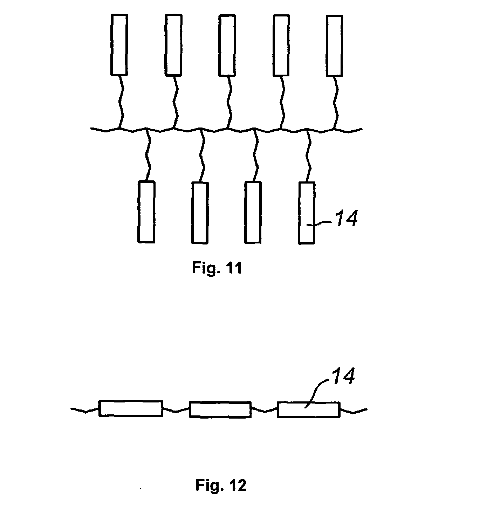

- Fig. 11: the diagrammatic representation of the comb-shaped LC polymer is shown.
- Fig. 12: the diagrammatic representation of the linear LC polymer is shown.

The main point of the invention is explained by the following example.

Example. On picture 1 a structure is shown consisting of glass layers 1, transparent electrode 2, film 3 and amorphous silicon 4. Later on number 3 will mean any film on which the nanostructure relief is being transferred. In this very case film 3 is a polyimide film. As a transparent electrode indium and tin oxide is often used. Layer 1, 2 and 3 construction (polyimide) is used to produce LCD and LC screens. Layer 4 ~400 nm thick should be applied, for example, in SiH₄ silane low-frequency discharge for 20 minutes, by a certain method (Budaguan B. G., Sherchenkov A. A., Struahilev D. A., Sazonov A. Y., Radosel' sky A. G., Chernomordic V. D., Popov A. A., and Metselaar J. W. "Amorphous Hydrogenated Silicon Films for Solar Cell Application Obtained with 55 kHz Plasma Enhanced Chemical Vapor Deposition" - Journal of the Electrochemical Society, 1998, Vol. 145, No 7, pp. 2508-2512). There are at least two more well-known methods of amorphous silicon layer formation at the substrate temperature close to the room one. One of them consists in applying silicon at silicon target vaporization by a cathode ray in hard vacuum. The other one is a method of magnetron sputtering of the silicon target. The undulating nanostructure is formed in the amorphous silicon layer precipitated by any of the mentioned above methods. The amorphous silicon layer thickness ~400 nm has been targeted by the nanostructure wavelength selection λ=150 nm and the conditions of its formation.

In picture 2 the surface of layer 4 is shown irradiated by 5 ion flow of nitrogen N₂⁺ molecule. The λ=150 nm nanostructure wavelength complies with nitrogen ion bombardment with respect to normal to the surface of layer 4 equal to 45°, ion energy equal to 8 keV and the nanostructure depth formation D_{F} = 120 nm at room temperature of the specimen. The ion gun placed in the evacuated vessel has been used to form the ion-beam. Nitrogen ion-beam with the current of 150 nA and diameter ~10 µm is scanning 100 to 100 µm² which was covering the surface area of layer 4 shown in picture 2. The undulating nanostructure 6 was being formed for ~2 minutes. At that the initial level of the surface of layer 4 was decreased due to the process of ion sputtering.

To increase the productivity of the nanostructure formation process it is advisable to use Kaufman's ion source which allows to get ion-beams of larger diameter and with the energy of nitrogen N₂⁺ ions more than 1 κeV results in the ion current density more than 1 mA x cm⁻² which practically coincides with the ion current density of the ion gun counting to pattern area of 1,5 mA x cm⁻². Kaufman's ion source aids to treat all the large area of the substrate surface at the same time for ~2 minutes. Vacuum unit with Kaufman's ion source should ensure the possibility of the substrate slope with respect to the ion flow in the angle range from 40 to 60°.

The formed undulating nanostructure is shown in picture 3. It consists of the amorphous silicon nitride areas 7 and the thin amorphous silicon layer 8 with nitrogen atom inclusions and N-N pairs. The nanostructure depressions are located from the film area 3 at the distance D approximately equal to one third of the nanostructure wavelength. Such nanostructure arrangement with respect to film 3 has been achieved by the turning off the ion flow 5 at the design moment of time at the certain sputtering rate of layer 4 with N₂⁺ion flow.

The nanostructure wave crests are arranged obliquely to the ion bombardment area which coincides with the plane of the drawing in picture 2. Thus the direction of the ion flow should be selected taking into account the desired nanostructure wave orientation on the film.

After the process of the undulating nanostructure formation is over, the process of its modification is carried out which consists in selective and anisotropic etching amorphous silicon layer 4 with areas 7 of the nanostructure being used as an etching mask in reactive- ion plasma Cl₂ Cl₂-Ar or Cl₂₋He―O₂. Such plasma chemical processes of silicon etching selective with respect to silicon nitride are well known and used in the modern technologies of silicon C 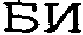 C (Plasma Technology in C 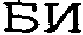 C production: Transl. from English with abridge./Edited by N. Inespruck, D. Brown.- Moscow : Mir, 1987, 472 p.). The anisotropic plasma silicon etching of the structure Cl₂-He-O₂ using silicon nitride and oxide masks has been explained in the patent specification (US 5882982, March 16, 1999). As a result of the anisotropic (vertical) amorphous silicon etching a nanomask is formed shown in picture 4. The etching of the polymer film 3 may be caused by oxygen presence in the gas mixture as well as by the physical sputtering of argon or helium ions of the polyimide film. Amorphous silicon areas 4 covered by silicon nitride areas 7 remain on the surface of the film 3.

In case of the high selectivity of plasma chemical silicon etching with respect to silicon nitride it is necessary to remove previously the thin layers 8 of the nanostructure, for example, in HF solution strongly diluted with HNO₃ before the nanostructure modification or any other nonselective method of plasma chemical etching.

After that the process of the isotropic etching of the structure shown in picture 4 should be carried out, for example, in O₂-CF₄ plasma. The nonselective isotropic removal of materials 3, 4 and 7 brings about the nanostructure relief transfer into film 3 as it is shown in picture 5.

The nanorelief transfer from layer 4 into the underlying film 3 can be carried out by means of the ion-beam or anisotropic plasma etching. At the nonselective removal of the nanostructure 6 materials and the underlying film 3 a relief on the surface of the film 3 is formed showed in picture 6. The wavelength of the transferred relief coincides with the nanostructure wavelength. If the ion sputtering coefficient of film 3 exceeds the amorphous silicon sputtering coefficient, then the transferred relief amplitude will exceed the nanostructure amplitude. In case of the reverse sputtering coefficient ratio the transferred relief amplitude will be less than the nanostructure amplitude.

It may seem important for polymer films to eliminate the effect of high-speed ion action onto their surface. The polymer layer damaged by the ions can be burned for example in oxygen plasma.

If it is necessary to carry out the nanostructure relief transfer into film 3 of silicon oxide SiO₂, the amorphous silicon layer should be applied onto the SiO₂ film. In this case silicon oxide is not practically etched in Cl₂-He-O₂ plasma and plays the part of stop-layer for the nanostructure plasma etching. As a result of such nanostructure plasma etching a structure is formed shown in picture 7.

The SiO₂ film anisotropic etching in fluorine-containing plasma, for example, in CF₄-H₂ or CHF₃ plasma using the nanomasks of the modified nanostructure shown in picture 7, with the nanomask subsequent removal in SF₆-O₂ plasma brings about the SiO₂ structure formation shown in picture 8.

The process similar to one that has been just described can be carried out with polymer films as well. In this case oxygen should not be added to the gas mixture at the nanostructure modification and just on the contrary, the polymer etching should be carried out in oxygen plasma. As a result of these processes it is also possible to get the structures shown in pictures 7 and 8.

It is evident that the nanostructure relief transfer can be carried out by means of the well-known methods of the ion-beam and plasma etching. Thus the invention can be technically realized.

### Commercial application

The invention can be used in constructing LCD and LC screens as well and in optical instrument-making industry. The invention can also be utilized in the Architectural glass industry for creating various specialized glass finishes. The invention can also be applied to the focusing of LEDs and for various structures on GaAs as per this application.

The nanorelief transferred to polymer films, to polyimide films in particular, polyethylene terephthalate and polyester sulfone, to SiO₂ glass, amorphous hydrogenated silicon and other films, can be used to make polarized and phase-shifting films and for liquid crystal orientation in LCD and LC screen units as it has been explained in the patent specification (DE 4213802, January 21, 93).

In picture 9, for example, the cross-section of the polarizer is shown made on the basis of the nanorelief tape 3 and the thermotropic nematic LC polymer 9 having in its structure dichroic dye groups with the polyimide protective film 10. The polarizer is made in the following way. On film 3 with the nanorelief LC polymer layer should be applied having low-molecular groups 14 in its structure shown in pictures 11 and 12. The LC polymer of the ribbed type as it is shown in picture 11, can be obtained on the basis of the methacrylic acid. The LC linear type polymer as it is shown in picture 12, can be obtained on the basis of polyether. Low-molecular groups 14 in the LC polymer structure may be the groups of low-molecular nematic liquid crystal and the groups of dichroic dyes. The LC polymer should be heated up to the temperature exceeding the temperature of the transition to the nematic phase and then cooled. Below the temperature of the transition to the nematic phase the LC polymer becomes oriented by the nanorelief of film 3. Along with the LC polymer orientation dichroic dye groups which can contain iodine, are also leveled. It is sufficient to have one iodine-containing dye to prepare the polarizer. Otherwise yellow, red, and blue dichroic dyes should be mixed up to achieve the effect that one iodine-containing dichroic dye is giving. Thus a film is formed the polarization of which is targeted by the relief direction on the surface of film 3.

In picture 10 LCD cross-section is shown which consists of the glass plates 1, indium and tin oxide layers 2, aligning films 3A and 3B turned with respect to one another by 90° between which the layer of nematic liquid crystal 13, phase-shifting plate 11 and polarizers 12 are placed.

Moreover the nanorelief in the films shown in pictures 5 and 8 can be used as an antireflecting coating because the nanorelief layer has a gliding refractive exponent between the volume film and the air. The altitude of such "covering" is equal to the film relief altitude and can be targeted by the thickness of the film itself.

The application of the reflecting covering on the nanorelief films, for example, aluminum, turns it into a diffuse directional reflector.

## Claims

1. The method of the nanorelief formation on the film surface consists in applying the amorphous silicon layer on the film from 1,5 to 3 depth thick of nanostructure formation in amorphous silicon;
dispersing the amorphous silicon surface with the ion flow of vacuum nitrogen molecules with the selection of nitrogen ion energy, nitrogen ion-beam angle with respect to the amorphous silicon surface, the depth of nanostructure formation and nanostructure altitude on the basis of the wavelength value in the range of 30-180 nm until the nanostructure is formed located from the film at the distance of one third wavelength along the nanostructure wave troughs and with the wave crest orientation obliquely to the direction of the ion flow projection onto the amorphous silicon surface;
transferring the nanostructure relief onto the film surface removing the nanostructure and film materials.

2. Method according to No. 1 where Kaufman's ion source should be used to form the nitrogen molecule ion flow.

3. Method according to No. 1 where the nanostructure and film materials should be removed by ion-beam etching.

4. Method according to No. 1 where the nanostructure and film materials should be removed by plasma etching.

5. Method according to No. 4 where the nanostructure amorphous silicon should be removed selectively with respect to the nanostructure silicon nitride and vertically with respect to the film surface right up to the film surface.

6. Method according to No. 4 where the film material should be removed vertically with respect to the film surface and selectively with respect to the nanostructure materials.

7. Method according to No. 5 where the nanostructure amorphous silicon should be removed by means of Cl₂-Ar reactive ion plasma etching.

8. Method according to No. 5 where the nanostructure amorphous silicon should be removed selectively with respect to the film material.

9. Method according to No. 6 where the amorphous silicon should be removed after removing the film material.
